# EUROPEAN PATENT SPECIFICATION

(11) **EP 0 438 280 B1**
(45) Date of publication and mention of the grant of the patent: **22.03.1995**
(21) Application number: 91300304.2
(22) Date of filing: 16.01.1991
(51) Int. Cl.: H01R 13/74

(54) **Floating panel mounts for electrical connectors**
Befestigungselemente zur schwimmenden Befestigung eines elektrischen Steckers an einer Grundplatte
Eléments de fixation pour l'assemblage movible d'un connecteur électrique sur panneaux

(30) Priority: 19.01.1990 US 467629; 05.10.1990 US 594804
(43) Date of publication of application: 24.07.1991
(73) Proprietor: MOLEX INCORPORATED, Lisle Illinois 60532 (US)
(72) Inventor: Peterson, Bruce A., Schaumburg, Illinois 60194 (US); Toedtman, Thomas N., Cupertino, California 95015 (US)
(74) Representative: Greenwood, John David

(56) References cited:
- DE-B- 2 058 668
- DE-C- 2 255 094
- US-A- 4 415 220
- US-A- 4 820 180
- US-A- 4 842 552

## Description

This invention generally relates to the art of electrical connectors and, particularly, to a floating panel mount for mounting an electrical connector to a panel.

### Background of the Invention

Panel mounted electrical connectors comprise a nonconductive or dielectric housing having at least one electrically conductive terminal mounted therein. The housing also includes or is adapted to receive means for mounting the housing to a panel. The panel mounted connector is mateable with other circuitry, such as another connector, which, in turn, may be mounted to a second panel, a cable or discrete wires.

The mating of a panel mounted electrical connector to another circuit component often is carried out under blind mating conditions such that precise alignment of the panel mounted connector with the other circuit components cannot be assured. Blind mating of panel mounted connectors may occur with components of photostatic copiers, computer equipment and telecommunications equipment. An attempt to forcibly blind mate improperly aligned electrical connectors can damage the housing of the connector, the fragile terminals in the housing or the panels to which the connectors are mounted. Improper alignment also may prevent complete mating, thereby negatively affecting the quality of the electrical connection.

Many prior art panel mounted electrical connectors are provided with means for permitting a controlled amount of float between the connector housing and the associated panel. Most such connectors have been fairly complex multi-component structures that are manufactured separately from the electrical connector and require complex assembly and installation. An example of such a floating panel mount is shown in U.S. Patent No. 4,647,130.

Other prior art floating panel mount connectors include a plurality of components that can be assembled to one another from opposite sides of the panel. These prior art connectors typically includes spacers which prevent tight engagement of the connector components to the panel. Thus, the assembled components permit a controlled amount of float relative to the panel about which they are assembled. An example of such a connector is shown in U.S. Patent No. 3,645,353 which issued to Cope et al. on February 29, 1972. Connectors of this type are undesirable in that the plural components required for the connector require complex assembly and substantially increase the cost of the connector. In this regard, it is important to emphasize that the electrical connector industry is extremely competitive, and even small savings in cost can be an extremely significant advantage.

Other floating panel mount connectors merely include a pair of angularly aligned deflectable latch arms that are mounted respectively to opposite sides of the housing, and that deflect upon insertion of the connector into the panel. The latch arms are dimensioned to pass through an aperture in the panel as the connector approaches its fully seated condition. The deflectable latch arms then are resiliently returned to their original alignment such that the ends of the latch arms will engage one side of the panel. Thus, the deflectable latch arms are intended to prevent separation of the connector from the panel while still permitting a limited amount of float between the connector and the panel. Examples of this prior art are shown in U.S. Patent No. 3,213,189 which issued to Mitchell et al on October 19, 1965; U.S. Patent No. 3,514,743 which issued to Schampz on May 26, 1970; and U.S. Patent No. 3,543,219 which issued to Pautrie on November 24, 1970. Similar prior art structures are shown in German Patent No. 258,382 dated November 27, 1967 and German Patent No. 2,547,951 dated May 5, 1977. Still another similar structure is shown in IBM Technical Disclosure Bulletin entitled "Interchangeable Means for Holding A Circuit Card to A Framework" dated February 1987.

The above described prior art floating panel mount connectors generally have been effective in retaining a connector to a panel. However, these prior art floating panel mount connectors often require significant forces to mount the connector to the panel. High mounting forces create the potential for damage to either the connector or to the panel. Attempts to reduce mounting forces by providing smaller more flexible deflectable latches create the potential for significant backup of the connector during mating. More particularly, the mating of the panel mounted connector to another circuit component generates mating forces as the electrically conductive connector terminals of the panel mounted connector engage the contact surfaces of the circuit component to which the panel mounted connector is mated. These high connector mating forces can cause the latches of the floating panel mount connector to deflect significantly and urge the panel mounted connector away from the circuit component connector with which it is mating. In some circumstances, this backup can prevent the panel mounted connector from mating fully with the other circuit component connectors.

An extremely effective prior art floating panel mount connector is shown in U.S. Patent No. 4,820,180 which issued to Rene Mosquera and Wayne Zahlit on April 11, 1989 and which is assigned to the assignee of the subject application. The floating panel mount disclosed in U.S. Patent No. 4,820,180 includes at least one pair of opposed multiple cantilevered latch structures with each multiple cantilevered latch structure comprising a plurality of independently deflectable cantilevered arms. The independent multiple deflection of the cantilevered arms enables mounting of the connector to the panel with low mounting forces. The cross-sectional dimensions of the arms also enable significant float of the connector relative to the panel. However, the angular alignment of the deflectable arms relative to one another achieves secure mounting of the connector to the panel. The angular alignment of the arms in each latch structure or in each pair of latch structures facilitates the deflection of the arms for selective removal of the connector from the panel. Other preferred features of the floating panel mount connector of U.S. Patent No. 4,820,180 are disclosed in that specification, the disclosure of which is incorporated herein by reference.

Although the floating panel mount electrical connector of U.S. Patent No. 4,820,120 is extremely effective, it is desirable to provide a floating panel that exhibits even less backup during mating, while still exhibiting the other desirable features of the floating panel mount disclosed in U.S. Patent No. 4,820,180, including low mounting forces and significant float.

### Summary of the Invention

An object, therefore, of the invention is to provide an improved floating panel mount for mounting an electrical connector to a panel, the panel having at least one mounting aperture therein.

In the exemplary embodiment of the invention, the floating panel mount may be unitarily molded with the housing of a panel mounted electrical connector, or may be selectively employed with a panel mountable electrical connector having means for receiving and engaging the subject floating panel mount structure. The floating panel mount and the associated electrical connector are employable with a panel having a mounting aperture extending therethrough.

The floating panel mount embodiments of the subject invention comprises a base disposed to extend substantially parallel to the panel to which the connector is mounted. The base may be unitarily molded with the mounting flange on the panel mountable electrical connector. The floating panel mount further comprises a post extending from the base and/or from the mounting flange of the connector. The post typically will extend substantially orthogonally from the base. The cross-sectional dimensions of the post are less than the cross-sectional dimensions of the mounting aperture extending through the panel to which the electrical connector is mounted. The relative differences between the cross-sectional dimensions of the post and the cross-sectional dimensions of the mounting aperture are selected in accordance with the amount of float that is preferred to exist therebetween. The length of the post is substantially greater than the thickness of the panel to which the connector is mounted.

The floating panel mount of the subject invention may further comprise at least one deflectable spiral vane which extends from the post. The vane is configured to deflect spirally inwardly and toward the post upon insertion of the floating panel mount into the mounting aperture of the panel. More particularly, the vane may be of tapered or generally triangular configuration to define a minor width at portions thereon remote from the base and to define progressively greater widths at locations thereon closer to the base. Portions of the vane spaced from the mounting post may be arcuate to facilitate the inward collapsing of the vane relative to the post. In particular, the vane may define a spirally configured outer edge and/or helically formed surfaces extending from the post to the outer edge. The shape of the vane is selected in accordance with the material from which the vane is formed and the relative dimensions of the vane. The shape and dimensions of the vane are selected to ensure inward collapsing of the vane relative to the post in response to relatively low forces generated as the post and the vane are urged through the mounting aperture in the panel.

Preferably, the floating panel mount comprises a plurality of vanes extending from the post. The vanes preferably are disposed generally symmetrically relative to the post to substantially minimize deflection of the post in response to mating forces. Additionally, the vanes preferably are configured to deflect in generally opposite directions relative to the post in response to the forces exerted thereon during mounting onto the panel. In particular, the vanes may be configured to deflect generally helically inwardly towards the post in response to the forces generated between the vanes and the panel during mounting of the electrical connector to the panel. The vanes are configured to progressively deflect inwardly as the connector is mounted to the panel. However, upon sufficient insertion into the panel, the trailing surface of each vane will clear the panel, thereby enabling the vanes to resiliently return to their original configuration. This resilient return of each vane to its original configuration will cause the trailing surface of the vane to engage a surface of the panel.

The floating panel mount is constructed to facilitate the selective separation of the connector from the panel. More particularly, relatively minor pressure exerted by a thumb and forefinger on the vane perpendicularly to the post will enable sufficient inward collapsing of the vane toward the post to enable the collapsed vanes to pass back through the mounting aperture in the panel.

The improvements of the present invention contemplate that the support post from which the spiral vanes project be generally circular in cross-section throughout substantially the entire length of the posts. This improves the strength of the panel mount attachment and considerably decreases the complexity of the required mold for unitarily molding the floating panel mount construction. In addition, an axial bore may extend at least partially through the post so that it is hollow through at least a portion of its length, particularly at the distal end thereof, to decrease the insertion force of the mount.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof may be appreciated from the following description taken in conjunction with the accompanying drawings, in which like reference numerals identify like elements in the figure and in which:
FIGURE 1 is a top plan view of an electrical connector employing the floating panel mount of the subject invention;
FIGURE 2 is a side elevational view of the electrical connector shown in Figure 1;
FIGURE 3 is a front elevational view of the electrical connector shown in Figure 1;
FIGURE 4 is a cross-sectional view taken along line 4-4 in Figure 1 and showing the connector mounted to a panel;
FIGURE 5 is a top plan view of an electrical connector employing an alternate embodiment of the floating panel mount of the subject invention;
FIGURE 6 is a side elevational view of the electrical connector shown in Figure 5;
FIGURE 7 is a front elevational view of the electrical connector shown in Figure 5;
FIGURE 8 is a perspective view, on an enlarged scale, of the support post of the floating panel mount shown in Figure 5, isolated from the housing to facilitate the illustration thereof; and
FIGURE 9 is a top plan view looking down onto the post as depicted in Figure 8.

### Detailed Description of the Preferred Embodiment

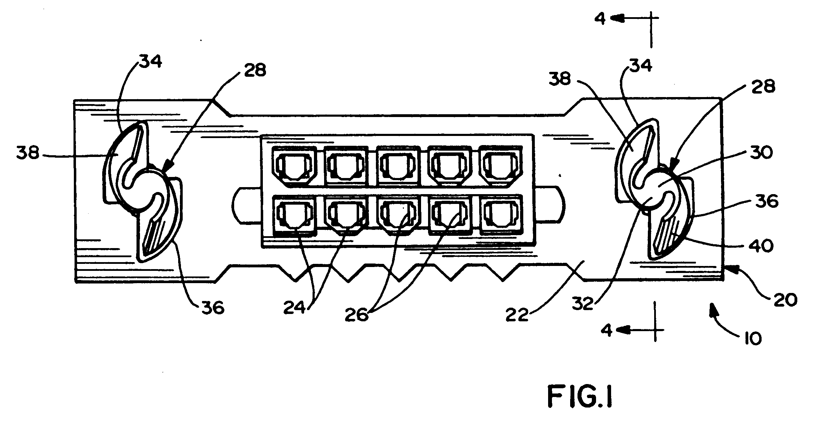

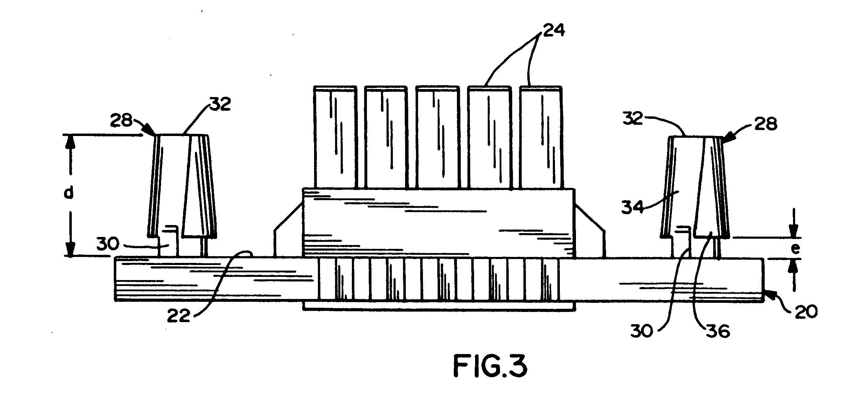

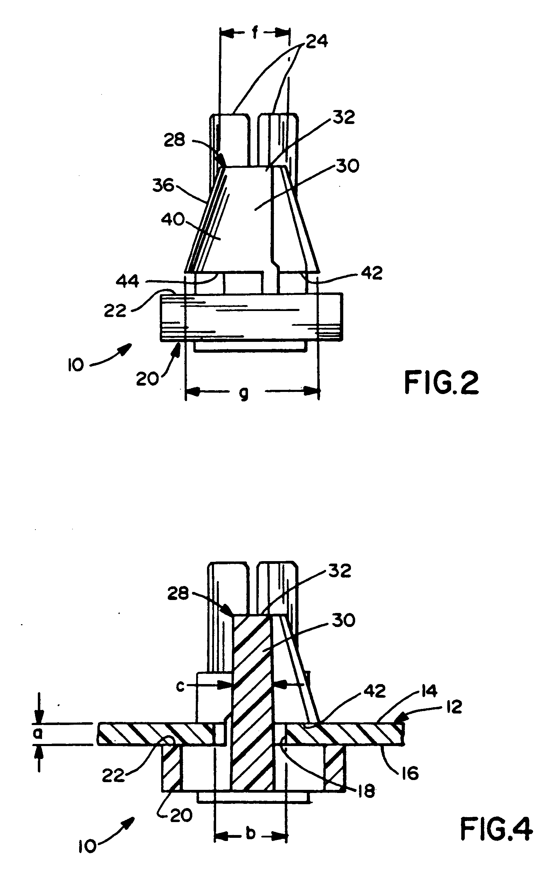

An electrical connector housing incorporating the panel mount of the subject invention is illustrated in Figures 1-4 and is identified generally by the numeral 10. The housing 10 is unitarily molded from a plastic material such as nylon, and is constructed to be floatably mounted relative to a generally planar panel which is identified by the numeral 12 in Figure 4. More particularly, the panel 12 is provided with opposed planar surfaces 14 and 16 defining a thickness "a" which, for example, may be approximately 0.09 inch. The panel 12 is provided with a pair of mounting apertures extending therethrough, with one such aperture being depicted in Figure 4, and being identified by the numeral 18. The mounting aperture 18 in the panel 12 defines a diameter "b", the relative dimensions of which will be described in greater detail below. The panel 12 further is provided with a mating aperture (not shown) extending therethrough and disposed intermediate a pair of the mounting apertures 18. The mating aperture (not shown) is dimensioned to receive the mating portion of the electrical connector housing 10 as explained further herein.

The electrical connector housing 10 is molded to include a mounting flange 20 having a generally planar mounting surface 22 for mounting in face-to-face relationship with the surface 16 of panel 12. The electrical connector housing 10 further comprises mating structures 24 extending from the mounting face 22 of the mounting flange 20. The mating structures 24 are formed to define a plurality of terminal receiving cavities 26 extending therethrough for lockingly receiving electrically conductive terminals (not shown) therein. The mating structures 24 are receivable in the correspondingly configured mating aperture (not shown) in the panel 12 depicted in Figure 4. The mating structures 24 are configured such that the electrical connector housing 10 defines a receptacle. It is to be understood, however, that the floating panel mount structures described herein can be incorporated into a plug connector housing.

The electrical connector housing 10 further comprises a pair of floating panel mounts 28 disposed on opposite respective sides of the mating structure 24 and extending from the mounting face 22 of the mounting flange 20. More particularly, each floating panel mount comprises a support post 30 extending unitarily from the mounting flange 20 and generally orthogonal to the mounting face 22 thereof. The support post 30 defines a major cross-sectional dimension "c" which is less than the diameter "b" of the mounting aperture 18 in the panel 12. The support post 30 extends from the mounting face 22 of the flange 20 to a top 32 to define a height "d" which is substantially greater than the thickness "a" of the panel 12. However, the height "d" of the support post 30 preferably is less than the overall height of the mating structures 24 to minimize the height or profile of the housing 10.

Each floating panel mount 28 further includes a pair of resiliently deflectable generally spirally formed vanes 34 and 36 extending in generally opposite directions from generally opposite sides of each respective support post 30. The vanes 34, 36 extend from a location generally adjacent the top 32 of the support post 30 to a location spaced from the mounting surface 22 of the flange 20 by a distance "e" which preferably is equal to or slightly greater than the thickness "a" of the panel 12. The vanes 34 and 36 of each floating panel mount 28 define a minor cross-sectional dimension "f" at locations thereon generally adjacent the top 32 of the support post 30. The minor cross-sectional dimension "f" is less than the diameter "b" of the mounting aperture 18 in the panel 12. The vanes 34 and 36 gradually flare to wider dimensions at locations thereon spaced further from the top 32 of the support post 30. More particularly, portions of the vanes 34 and 36 closest to the mounting face 22 of the mounting flange 20 define a major cross-sectional dimension "g" which is greater than the diameter "b" of the mounting aperture 18 in the panel 12. the vanes 34 and 36 thus define generally frustum shaped outer surfaces 38 and 40 respectively. The vanes 34 and 36 further define panel engaging bottom surfaces 42 and 44 respectively. The bottom surfaces 42 and 44 are formed to lie generally in a plane extending parallel to the mounting face 22 of the mounting flange 12, and are spaced therefrom by dimension "e" referred to above and illustrated most clearly in Figure 3.

The vanes 34 and 36 are formed to define relatively narrow thicknesses extending inwardly from the outer generally frustum shaped surfaces 38 and 40. More particularly, the thickness of each vane 34, 36 at locations thereon generally adjacent the top 32 of the support post 30 preferably is approximately 0.02 inch, and may taper to slightly greater thicknesses at locations spaced further from the top. The relatively thin construction of each vane 34, 36 enables the vanes to be readily collapsed generally helically inwardly as the floating panel mounts 28 are urged into the mounting apertures 18 of the panel 12. More particularly, the movement of the electrical connector housing 10 toward the panel 12 generates ramping forces between the tapered outer surfaces 38 and 40 of the vanes 34 and 36 against the periphery of the mounting aperture 18 in the panel 12. The ramping forces against the outer surfaces 38 and 40 of the relatively thin vanes 34 and 36 will cause the inward generally helical collapsing of the vanes 34 and 36 toward the support post 30. This gradual inward helical collapsing of the vanes 34 and 36 enables the mounting flange 20 of the electrical connector housing 10 to be advanced toward the panel 12. As the mounting surface 22 of the flange 20 approaches the surfaces 16 of the panel 12, the bottom surfaces 42 and 44 of the vanes 34 and 36 respectively will clear the surface 14 of the panel 12 as illustrated most clearly in Figure 4. This movement of the vanes 34 and 36 beyond the surface 14 of the panel 12 will enable the vanes 34 and 36 to resiliently return to their original position. As noted above, the major cross-sectional dimension "g" defined by the portions of the vanes 34 and 36 adjacent the bottom surfaces 42 and 44 thereof significantly exceeds the width "b" of the mounting aperture 18 in the panel 12. Thus, the panel 12 will be effectively trapped between the mounting surface 22 of the flange 20 and the bottom surfaces 42 and 44 of the vanes 34 and 36. However, as shown in Figure 4, and as explained above, the support post 30 defines a width "c" which is substantially less than the diameter "b" of the mounting aperture 18 in the panel 16. Thus, the entire electrical connector housing 10 may float radially relative to the panel 12 in response to forces exerted during mating, thereby ensuring proper alignment for mating the electrical connector housing 10 with another electrical connector housing.

As noted above, it is desirable to prevent excessive backup of the electrical connector housing 10 in response to forces exerted during mating. In this context, backup refers to movement of the electrical connector housing 10 in a direction that would space the mounting face 22 of the mounting flange 20 further away from the face 16 of the panel 12. Such backup of the electrical connector housing 10 could prevent complete mating. Backup is substantially prevented by the vanes 34 and 36 of the electrical connector housing 10.

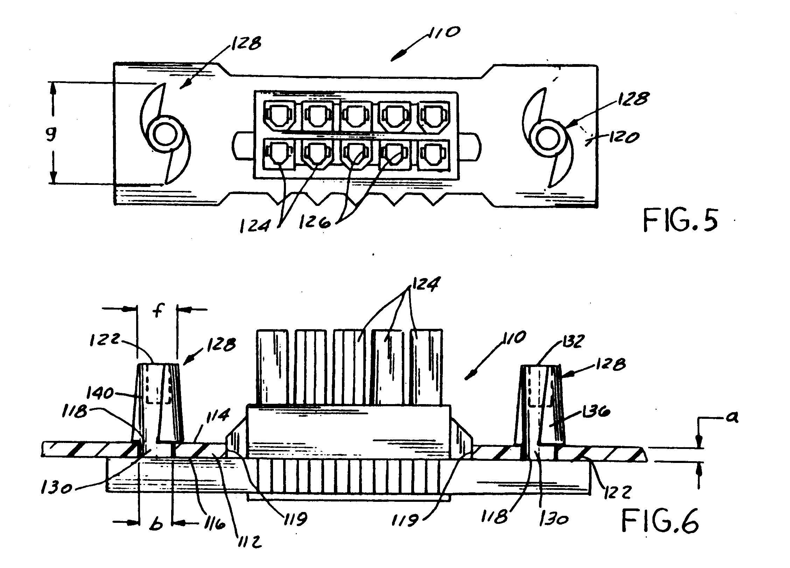

Referring now to Figure 5-9, an alternate embodiment of the subject invention is illustrated and is identified generally by the numeral 110. The reference numerals for components of panel mount 110 that are the same as or similar to those of panel mount 10 have one hundred added to those of panel mount 10. The housing is unitarily molded from a plastic material, such as nylon, and is constructed to be floatably mounted relative to a generally planar panel which is identified by the numeral 112 in Figure 6. More particularly, the panel is provided with opposed planar surfaces 114 and 116 defining a thickness "a" which, for example, may be approximately 0.09 inch. The panel is provided with a pair of mounting apertures 118 extending therethrough. Each mounting aperture 118 in panel 112 defines a diameter "b", the relative dimensions of which will be described in greater detail below. The panel further is provided with a mating aperture 119 extending therethrough and disposed intermediate a pair of the mounting apertures 118. The mating aperture is dimensioned to receive the mating portion of the electrical connector housing 110 as explained further herein.

The electrical connector housing 110 is molded to include a mounting flange 120 having a generally planar mounting surface 122 for mounting in face-to-face relationship with surface 116 of panel 112. Housing 110 further comprises mating structures 124 extending from mounting face 122 of mounting flange 120. The mating structures are formed to define a plurality of terminal receiving cavities 126 extending therethrough for lockingly receiving electrically conductive terminals (not shown) therein. The mating structures are receivable in correspondingly configured mating apertures of a mating connector housing (not shown). The mating structures 124 are configured such that electrical connector housing 110 defines a receptacle. It is to be understood, however, that the floating panel mount structure described herein can be incorporated in a plug connector housing.

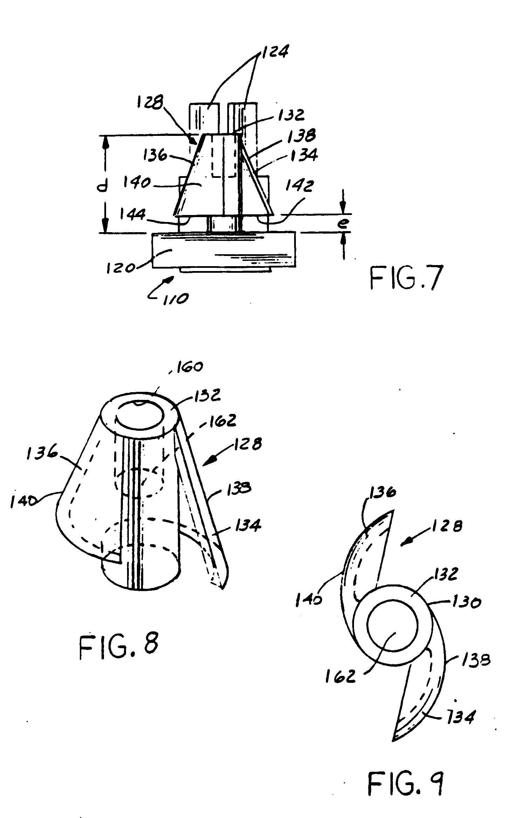

Electrical connector housing 110 further includes a pair of floating panel mounts, generally designed 128, disposed on opposite sides of mating structures 124 and extending from mounting face 122 of mounting flange 120. More particularly, each floating panel mount 128 includes a support post 130 extending unitarily from mounting flange 120 and generally orthogonal to mounting ace 122. The support post defines a cross-sectional dimension which is less than diameter "b" of a mounting aperture 118 in panel 112. The support post extends from mounting face 122 of flange 120 to a top 132 to define a height "d" (Figure 7) which is substantially greater than the thickness "a" of panel 112. However, the height "d" of the support post preferably is less than the overall height of mating structures 124 to minimize the height or profile of connector housing 110.

Each floating panel mount 128 further includes a pair of resiliently deflectable, generally spirally formed vanes 134 and 136 extending in generally opposite directions from generally opposite sides of each respective support post 130. The vanes 134, 136 extend from a location generally adjacent the top 132 of the support post to a location spaced from mounting surface 122 of flange 120 by a distance "e" (Figure 7) which preferably is equal to or slightly greater than thickness "a" of panel 112. Vanes 134 and 136 of each floating panel mount 128 define a minor cross-sectional dimension "f" (Figure 6) at locations thereon generally adjacent the top of the support post 130. The minor cross-sectional dimension "f" is less than the diameter "b" of the mounting aperture 118 in panel 112. Vanes 134 and 136 gradually flare to wider dimensions at locations thereon spaced further from the top of support post 130. More particularly, portions of vanes 134 and 136 closest to the mounting face 122 of the mounting flange 120 define a major cross-sectional dimension "g" (Figure 5) which is greater than the diameter "b" of the mounting aperture 118 in panel 112. Vanes 134 and 136 thus define generally frustum shaped outer surface 138 and 140, respectively. Vanes 134 and 136 further define panel engaging bottom surfaces 142 and 144, respectively. The bottom surfaces are formed to lie generally in a plane extending parallel to mounting face 122 of mounting flange 112, and are spaced therefrom by dimension "e" referred to above and illustrated most clearly in Figure 7.

In assembly, the movement of electrical connector housing 110 toward the panel 112 generates ramping forces between tapered outer surfaces 138 and 140 of the vanes 134 and 136 against the periphery of mounting apertures 118 in panel 112. The ramping forces against the outer surfaces of the vanes will cause inward generally helical collapsing of the vanes toward support post 130. This gradual inward helical collapsing of vanes 134 and 136 enables the mounting flange 120 of the electrical connector housing 110 to be advanced toward the panel 112. As mounting surface 122 of the flange 120 approaches surface 116 of panel 112, bottom surfaces 142 and 144 of vanes 134 and 136 respectively will clear surface 114 of panel 112. This movement of vanes 134 and 136 beyond surface 114 of panel 112 will enable the vanes to resiliently return to their original position. As noted above, the major cross-sectional dimension "g" defined by the portions of the vanes adjacent bottom surfaces 142 and 144 significantly exceeds the width "b" of mounting aperture 118 in the panel. Thus, the panel will be effectively trapped between mounting surface 122 of flange 120 and bottom surfaces 142 and 144 of vanes 134 and 136. However, support post 130 defines a width which is substantially less than the diameter "b" of mounting aperture 118 in panel 116. Thus, the entire electrical connector housing 110 may float radially relative to panel 112 in response to forces exerted during mating, thereby ensuring proper alignment for mating the electrical connector housing with another electrical connector housing.

As best seen in Figure 9, support post 130 is circular in cross-section throughout substantially the entire length thereof from surface 122 of flange 120 to the top 132 of the post. This circular configuration improves the strength of the panel mount attachment provided by floating panel mounts 128 and, importantly, significantly decreases the complexity of the required mold to unitarily mold the entire electrical connector housing 110, including floating panel mounts 128.

As best seen in the enlarged depictions of Figures 8 and 9, in conjunction with Figure 5, at least portions of posts 130 are hollowed out by an axial bore 160 extending from top 132 of each support post to a base 162 of the bore partially down the height of the post. The bore decreases the insertion forces involved when panel mounts 128 are inserted through apertures 118 in panel 112. Specifically, the insertion forces are reduced because the walls of each post 130, defined by the outside diameter of the circular post and the inside diameter defined by bore 160, can flex inwardly, particularly at the distal end of each post. However, withdrawal forces are not compromised due to maintaining the post strength as a solid structure between base 162 of bore 160 and flange 120 of the electrical connector housing 110.

In summary, a floating panel mount is provided for an electrical connector. The floating panel mount may be unitarily molded with the electrical connector housing to extend from a generally planar mounting flange thereof. The floating panel mount includes a circular support post extending generally orthogonal to the mounting flange of the electrical connector housing, with a pair of helically inwardly collapsible vanes extending from opposite sides of the support post. The circular support post provides increased strength for the attachment capabilities of the panel mount. The vanes are configured to be helically inwardly collapsed against the support post in response to forces exerted on outer portions of the vanes as the floating panel mounts are urged into the mounting aperture of a panel. The bore in the support post decreases the insertion forces involved. After complete mounting, the panel will be engaged between the mounting flange of the electrical connector housing and the bottom edges of the vanes. This engagement prevents backup during mating, but permits radial float of the electrical connector housing relative to the panel. The vanes preferably are formed to be of a generally spiral configuration with generally frustum shaped outer surfaces to permit the inward helical collapsing of the vanes relative to the support post during mounting of the electrical connector housing to a panel.

While the invention has been described with respect to certain preferred embodiments, it is apparent that various changes can be made without departing from the scope of the invention as defined by the appended claims. In particular, the floating panel mount need not be unitarily molded with the electrical connector housing but may define a separate structure used in combination with an electrical connector housing.

## Claims

1. A floating panel mount (128) for mounting an electrical connector to a panel (112), said panel having at least one mounting aperture (118) therein, said floating panel mount comprising:
a mounting flange (120);
a support post (130) extending from said mounting flange, said support post having a cross-sectional dimension less than the cross-sectional dimension of the mounting aperture and a length greater than the thickness of the panel, the post being generally circular in cross-section throughout substantially the entire length thereof; and
a generally tapered securing means extending generally about said support post in spaced relationship thereto, said securing means having first and second (132) ends, said first end being adjacent to but spaced from the mounting flange by a distance slightly greater than the thickness of the panel, the cross-sectional dimension of said first end being greater than the cross-sectional dimension of the mounting aperture, said securing means being resiliently deflectable inwardly toward said support post to define a cross-sectional dimension less than the cross-sectional dimension of the mounting aperture; and
said securing means comprises at least one vane (134), said at least one vane extending along substantially the entire length of said support post spaced from said mounting flange.

2. A floating panel mount as in claim 1 wherein said securing means is generally frusto-conically shaped.

3. A floating panel mount as in claim 1 wherein said support post has a bore (160) extending axially from a distal end (132) thereof to decrease the force required to insert said securing means through said mounting aperture.

4. An electrical connector housing (110) for floatable mounting to a panel (112), said panel comprising a pair of spaced apart mounting apertures (118) extending therethrough, each said aperture (118) defining a cross-sectional dimension, said electrical connector housing comprising a pair of spaced apart floating panel mounts (128) for engaging the mounting apertures of the panel and permitting limited float between the electrical connector housing and the panel, each said floating panel mount comprising:
a generally planar mounting flange (120);
a support post (130) extending substantially perpendicularly from the mounting flange (120) for a distance greater that the thickness of the panel, said support post defining a cross-sectional dimension that is less than the cross-sectional dimension of the mounting aperture, the post (130) being generally circular in cross-section throughout substantially the entire length thereof; and
a pair of vanes (134, 136) extending along substantially the entire length and from generally opposite sides of the support post at locations thereon spaced from the mounting flange, each said vane extending generally spirally about said support post and being resiliently deflectable inwardly toward said support post, said vanes being tapered to define a minor width at locations thereon most distant from the mounting flange and to define a major width at locations thereon closer to the mounting flange, the minor width defined by the vane being less than the cross-sectional dimension of the mounting aperture, the major width defined by said vane being greater than the cross-sectional dimension defined by the mounting aperture.

5. An electrical connector housing as in claim 4 wherein each said vane (134, 136) includes a panel engaging surface (142, 144) defining the portion of said vane closest to the mounting flange, the panel engaging surface being spaced from the mounting flange by a distance slightly greater than the thickness of the panel.

6. An electrical connector housing as in claim 5 wherein the vanes define a width in their inwardly deflected condition that is less than the cross-sectional dimension of the mounting aperture.

7. An electrical connector housing as in claim 4 or claim 6 wherein said support post (130) has a bore (160) extending axially from a distal end (132) thereof to decrease the force required to mount said electrical connector to said panel.

8. An electrical connector housing as in claim 3 or claim 7 wherein said bore (160) extends only partially through the length of the post.

## Patentansprüche

1. Befestigungsvorrichtung (128) zur Plattenschwimmbefestigung, für ein Befestigen eines elektrischen Verbinders an einer Platte (112), wobei die Platte zumindest eine Befestigungsöffnung (118) aufweist und in die Befestigungsvorrichtung zur Plattenschwimmbefestigung einbezogen sind:
ein Befestigungsflansch (120),
ein vom Befestigungsflansch ausgehender Tragstift (130), wobei der Tragstift ein Querschnittsmaß, das kleiner als das Querschnittsmaß der Befestigungsöffnung ist, und eine Länge besitzt, die größer als die Dicke der Platte ist, und der Stift eine kreisförmige Querschnittsgrundform über im wesentlichen seine gesamte Länge aufweist, und
eine generell verjüngte Befestigungseinrichtung, die sich generell um den Tragstift im Abstandsverhältnis zu diesem herumerstreckt, wobei die Befestigungseinrichtung ein erstes und ein zweites (132) Ende besitzt, das erste Ende an den Befestigungsflansch angrenzt, jedoch von diesem um ein Maß beabstandet ist, das geringfügig größer ist als die Dicke der Platte, das Querschnittsmaß des ersten Endes größer ist als das Querschnittsmaß der Befestigungsöffnung und die Befestigungseinrichtung elastisch nach innen zum Tragstift biegbar ist, um ein Querschnittsmaß zu bilden, das kleiner ist als das Querschnittsmaß der Befestigungsöffnung, und daß
die Befestigungseinrichtung zumindest einen Flügel (134) umfaßt, wobei sich der zumindest eine Flügel entlang im wesentlichen der gesamten Länge des Tragstiftes im Abstand vom Befestigungsflansch erstreckt.

2. Befestigungsvorrichtung zur Plattenschwimmbefestigung nach Anspruch 1, bei der die Befestigungseinrichtung in etwa kegelstumpfförmig ausgebildet ist.

3. Befestigungsvorrichtung zur Plattenschwimmbefestigung nach Anspruch 1, bei der der Tragstift eine Bohrung (160) besitzt, die in axialer Richtung von seinem äußeren Ende (132) ausgeht, um die zum Einsetzen der Befestigungseinrichtung durch die Befestigungsöffnung erforderliche Kraft herabzusetzen.

4. Gehäuse (110) eines elektrischen Verbinders für eine Schwimmbefestigung an einer Platte (112), wobei die Platte ein Paar voneinander beabstandeter, sich durch sie hindurcherstreckender Befestigungsöffnungen (118) aufweist, jede Öffnung (118) ein Querschnittsmaß definiert, das Gehäuse des elektrischen Verbinders ein Paar beabstandeter Befestigungsvorrichtungen (128) zur Plattenschwimmbefestigung für einen Eingriff mit den Befestigungsöffnungen der Platte und zur Ermöglichung einer begrenzten Schwimmbewegung zwischen dem Gehäuse des elektrischen Verbinders und der Platte umfaßt und in jede Befestigungsvorrichtung zur Plattenschwimmbefestigung einbezogen sind
ein im wesentlichen ebener Befestigungsflansch (120),
ein Tragstift (130), der sich im wesentlichen senkrecht vom Befestigungsflansch (120) über ein Maß erstreckt, das größer ist als die Dicke der Platte, wobei der Tragstift ein Querschnittsmaß definiert, das kleiner ist als das Querschnittsmaß der Befestigungsöffnung, und der Stift (130) eine kreisförmige Querschnittsgrundform über im wesentlichen seine gesamte Länge aufweist, und
ein Paar von Flügeln (134,136), die sich über im wesentlichen die gesamte Länge und von im wesentlichen gegenüberliegenden Seiten des Tragstiftes an diesem an vom Befestigungsflansch beabstandeten Stellen auf erstrecken, wobei sich jeder Flügel im wesentlichen spiralförmig um den Tragstift erstreckt und elastisch einwärts zum Tragstift hin biegbar ist, die Flügel zur Bildung einer kleineren Breite an den vom Befestigungsflansch äußersten Stellen und zur Bildung einer größeren Breite an den zum Befestigungsflansch näheren Stellen verjüngt sind, die vom Flügel definierte kleinere Breite kleiner ist als das Querschnittsmaß der Befestigungsöffnung und die vom Flügel definierte größere Breite größer ist als das von der Befestigungsöffnung definierte Querschnittsmaß.

5. Gehäuse eines elektrischen Verbinders nach Anspruch 4, bei dem jeder Flügel (134,136) eine Platteneingriffsfläche (142,144) aufweist, die den zum Befestigungsflansch nächstgelegenen Bereich des Flügels bildet, und die Platteneingriffsfläche vom Befestigungsflansch um ein Maß beabstandet ist, das geringfügig größer ist als die Dicke der Platte.

6. Gehäuse eines elektrischen Verbinders nach Anspruch 5, bei dem die Flügel in ihrem nach innen gebogenen Zustand eine Breite definieren, die kleiner ist als das Querschnittsmaß der Befestigungsöffnung.

7. Gehäuse eines elektrischen Verbinders nach Anspruch 4 oder Anspruch 6, bei dem der Tragstift (130) eine Bohrung (160) besitzt, die von einem äußeren Ende desselben in axialer Richtung verläuft, um die zum Befestigen des elektrischen Verbinders an der Platte erforderliche Kraft zu verringern.

8. Gehäuse eines elektrischen Verbinders nach Anspruch 3 oder Anspruch 7, bei dem sich die Bohrung (160) nur teilweise durch die Länge des Stiftes erstreckt.

## Revendications

1. Elément de fixation flottante sur panneau (128) pour le montage d'un connecteur électrique à un panneau (112), ledit panneau comportant au moins une ouverture de montage (118), ledit élément de fixation flottante sur panneau comprenant :
une bride d'embrochage (120) ;
un tenon de support (130) qui s'étend depuis ladite bride d'embrochage, ledit tenon de support ayant en section droite une dimension inférieure à la dimension en section droite de l'ouverture de montage et une longueur supérieure à l'épaisseur du panneau, le tenon ayant une section droite généralement circulaire sur sensiblement la totalité de sa longueur ; et
un moyen de fixation généralement évasé s'étendant généralement autour dudit tenon de support et écarté par rapport à celui-ci, ledit moyen de fixation comprenant une première et une deuxième extrémités (132), ladite première extrémité étant adjacente à la bride d'embrochage mais écartée de celle-ci d'une distance légèrement supérieure à l'épaisseur du panneau, la dimension de la section droite de ladite première extrémité étant supérieure à la dimension de la section droite de l'ouverture de montage, ledit moyen de fixation étant déformable par élasticité vers l'intérieur dans la direction dudit tenon de support pour définir une dimension en section droite inférieure à la dimension en section droite de l'ouverture de montage ; et
ledit moyen de fixation comportant au moins une ailette (134), ladite ailette s'étendant sensiblement le long de la totalité de la longueur dudit tenon de support de façon espacée de ladite bride d'embrochage.

2. Elément de fixation flottante sur panneau selon la revendication 1, dans lequel ledit moyen de fixation a une forme généralement tronconique.

3. Elément de fixation flottante sur panneau selon la revendication 1, dans lequel ledit tenon de support comporte un alésage (160) qui s'étend dans une direction axiale depuis son extrémité distale (132) pour réduire l'effort nécessaire à l'insertion dudit moyen de fixation à travers ladite ouverture de montage.

4. Boîtier pour connecteur électrique (110) pour montage flottant sur panneau (112), ledit panneau comportant une paire d'ouvertures de montage traversantes (118) écartées l'une de l'autre, chacune desdites ouvertures (118) définissant une dimension en section droite, ledit boîtier de connecteur électrique comprenant une paire d'éléments de fixation flottante sur panneau (128) écartés l'un de l'autre pour coopérer avec les ouvertures de montage du panneau et permettre un déplacement limité entre le boîtier du connecteur électrique et le panneau, chacun desdits éléments de fixation flottante sur panneau comprenant :
une bride d'embrochage généralement plane (120) ;
un tenon de support (130) qui s'étend sensiblement dans une direction perpendiculaire à la bride d'embrochage (120) sur une distance supérieure à l'épaisseur du panneau, ledit tenon de support définissant en section droite une dimension inférieure à la dimension en section droite de l'ouverture de montage, le tenon (130) ayant une section droite généralement circulaire sensiblement sur la totalité de sa longueur ; et
une paire d'ailettes (134, 136) qui s'étendent sensiblement le long de la totalité de la longueur et à partir des côtés généralement opposés du tenon de support en des emplacements de celui-ci écartés de la bride d'embrochage, chacune desdites ailettes s'étendant généralement dans une direction en spirale autour dudit tenon de support et étant déformable par élasticité vers l'intérieur dans la direction dudit tenon de support, lesdites ailettes étant évasées pour définir une largeur inférieure à des emplacements de celles-ci les plus éloignés de la bride d'embrochage et pour définir une largeur supérieure à des emplacements de celles-ci plus rapprochés de la bride d'embrochage, la largeur inférieure définie par l'ailette étant inférieure à la dimension en section droite de l'ouverture de montage, la largeur supérieure définie par ladite ailette étant supérieure à la dimension en section droite définie par l'ouverture de montage.

5. Boîtier pour connecteur électrique selon la revendication 4, dans lequel ladite ailette (134, 136) comporte une surface de coopération avec le panneau (142, 144) qui définit la portion de ladite ailette la plus voisine de la bride d'embrochage, la surface de contact avec le panneau étant écartée de la bride d'embrochage d'une distance légèrement supérieure à l'épaisseur du panneau.

6. Boîtier pour connecteur électrique selon la revendication 5, dans lequel les ailettes définissent une largeur en position déformée vers l'intérieur, qui est inférieure à la dimension en section droite de l'ouverture de montage.

7. Connecteur électrique selon la revendication 4 ou la revendication 6, dans lequel ledit tenon de support (130) comporte un alésage (160) qui s'étend dans une direction axiale depuis son extrémité distale (132) pour diminuer l'effort nécessaire au montage dudit connecteur électrique sur ledit panneau.

8. Boîtier pour connecteur électrique selon la revendication 3 ou la revendication 7, dans lequel ledit alésage (160) ne s'étend que partiellement à travers la longueur du tenon.
